# EUROPÄISCHE PATENTSCHRIFT

(11) **EP 2 644 928 B1**
(45) Veröffentlichungstag und Bekanntmachung des Hinweises auf die Patenterteilung: **07.09.2016**
(21) Anmeldenummer: 13160541.2
(22) Anmeldetag: 22.03.2013
(51) Int. Cl.: F16D 65/18

(54) **Scheibenbremse für ein Nutzfahrzeug**
Disc brake for a commercial vehicle
Frein à disque pour un véhicule utilitaire

(30) Priorität: 26.03.2012 DE 102012006109
(43) Veröffentlichungstag der Anmeldung: 02.10.2013
(73) Patentinhaber: KNORR-BREMSE Systeme für Nutzfahrzeuge GmbH, 80809 München (DE)
(72) Erfinder: Fischl, Tobias, 94474 Vilshofen (DE); Werth, Alexander, 80999 München (DE)
(74) Vertreter: Schönmann, Kurt

(56) Entgegenhaltungen:
- EP-A2- 1 319 858
- WO-A1-03/023244
- DE-U1- 9 206 052
- DE-U1- 9 208 699
- US-A1- 2005 098 395
- US-A1- 2011 247 905

## Beschreibung

Die Erfindung betrifft eine Scheibenbremse für ein Nutzfahrzeug nach dem Oberbegriff des Anspruchs 1.

Der Bremssattel einer solchen Scheibenbremse dient zum einen der Lagerung von Funktionsteilen, die zum Betrieb der Scheibenbremse erforderlich sind, und zum anderen der Aufnahme von Kräften, wie sie beim Bremsen auftreten.

Zu den Funktionsteilen zählt u.a. eine Zuspanneinrichtung, die in einer Aufnahmekammer des Bremssattels angeordnet ist und die einen sich einerseits am Rücken des Bremssattels und andererseits in einer Traverse abstützenden, schwenkbaren Hebel aufweist, sowie mindestens einen, bei einer Bremsung an einen Bremsbelag anpressbaren Bremsstempel, der in einer Traverse gelagert ist. Weiter weist die Zuspanneinrichtung eine Nachstelleinrichtung auf, mit der ein sich verschleißbedingt veränderndes Lüftspiel, also des Abstands zwischen dem Bremsstempel und dem Bremsbelag, ausgeglichen wird.

An der Traverse stützt sich eine Druckfeder ebenso ab wie an einer Verschlussplatte, die eine Öffnung der Aufnahmekammer auf der dem zugeordneten Bremsbelag zugewandten Seite verschließt. Dabei ist der oder sind, vorzugsweise zwei parallel und abständig zueinander angeordnete Bremsstempel durch die Verschlussplatte geführt, die mit dem Bremssattel üblicherweise verschraubt ist.

Der von einem pneumatisch betätigten Stößel oder elektromechanisch verschwenkbare Bremshebel wird von einem Hebeldom überdeckt, der Bestandteil des Bremssattels ist und der die Aufnahmekammer überwölbt.

Bei Betätigung der Bremse, also einem Verschwenken des Bremshebels, wird die Traverse und werden damit die Bremsstempel gegen den Bremsbelag und in der Folge dieser gegen die Bremsscheibe gepresst, woraufhin bei einem als Schiebesattel ausgebildeten Bremssattel aufgrund der auftretenden Reaktionskräfte der Bremssattel unter Mitnahme eines reaktionsseitigen Bremsbelages in Richtung der Bremsscheibe verfährt, bis beide Bremsbeläge bremsend an der Bremsscheibe anliegen.

Der Bremssattel muss daher eine ausreichende Festigkeit aufweisen, um die auftretenden Kräfte aufnehmen zu können. Hierzu ist der bekannte Bremssattel als Gussteil ausgebildet und entsprechend dimensioniert.

Allerdings ist die Herstellung des Bremssattels relativ aufwändig, vor allem weil die für die Unterbringung der Zuspanneinrichtung notwendige Aufnahmekammer sowie der sich daran anschließende Hebeldom ausgeformt werden müssen, was gießtechnisch sehr anspruchsvoll ist.

Die Hauptbelastungsbereiche des Bremssattels, d.h., die Kraftangriffspunkte, liegen jedoch außerhalb der Aufnahmekammer, nämlich in dem dem reaktionsseitigen Bremsbelag zugeordneten Sattelrücken, dem gegenüberliegenden Sattelkopf, an dem sich der Bremshebel abstützt, sowie in die beiden Sattelteile miteinander verbindenden Zugstreben.

Alles in allem ist die Herstellung des Bremssattels sehr aufwändig und teuer und steht somit den ständigen Forderungen nach einer Kostenoptimierung entgegen.

Um eine Reduzierung der Herstellungskosten zu erreichen, ist bereits vorgeschlagen worden, den Bremssattel zweiteilig auszubilden und die beiden Teile miteinander zu verschrauben, wobei allerdings beide Teile aus Gusseisen hergestellt sind, so dass sich an der grundsätzlichen Problematik insbesondere hinsichtlich der Ausformung der Aufnahmekammer und des Hebeldoms nichts ändert.

Eine solche zweiteilige Ausbildung des Bremssattels ist aus der WO 03/023244 A1 bekannt, ebenso wie aus der EP 1 319 858 A2.

Die DE 92 08 699 U1 sowie die DE 92 06 052 U1 offenbaren jeweils einen Bremssattel, der zwar gleichfalls mehrteilig ausgebildet ist, bei dem die Aufnahmekammer durch einen außenseitig durch einen eine Montageöffnung verschließenden Deckel verschlossen ist, der den Sattelkopf bildet, an dem sich der Bremshebel abstützt.

In diesem Sinne ist auch eine aus der US 2011/247905 A1 bekannte Scheibenbremse gestaltet, bei der ein die Aufnahmekammer mit angeformtem Hebeldom verschließender Deckel zusätzlich noch einen Flansch zur Befestigung eines Bremszylinders trägt.

In der US 2005/0098395 A1 ist eine Scheibenbremse thematisiert, bei der die Zuspanneinrichtung in einem Gehäuse gelagert ist, das außenseitig in eine Ausnehmung eines Rahmens eingesetzt und durch eine Verschlussplatte in dieser Position gehalten ist. Die Verschlussplatte ist mit dem Rahmen durch Schrauben verbunden, die durch Durchgangsöffnungen des Rahmens geführt sind. Der Bremshebel stützt sich dabei einerseits an einer Traverse und andererseits an der Verschlussplatte ab.

Der Erfindung liegt die Aufgabe zugrunde, einen Bremssattel der gattungsgemäßen Art so weiterzuentwickeln, dass er bei unveränderter Belastbarkeit einfacher und kostengünstiger herstellbar ist.

Diese Aufgabe wird durch eine Scheibenbremse mit den Merkmalen des Anspruchs 1 gelöst.

Diese konstruktive Ausbildung der Scheibenbremse führt gegenüber dem Stand der Technik zu einer ganzen Reihe von Vorteilen.

So ist vor allem die einfachere und damit kostengünstigere Herstellung zu nennen, da der erfindungsgemäß vorgesehene geschlossene Rahmen, aus dem der Bremssattel nun besteht, gießtechnisch wesentlich einfacher herzustellen ist als dies bislang der Fall war. Dies vor allem deshalb, weil auf die komplizierte Ausformung der Aufnahmekammer und des Hebeldoms verzichtet werden kann, die immer den Einsatz entsprechender Kerne erforderte.

Stattdessen kann das separate Gehäuse, in dem die Zuspanneinrichtung nun positioniert ist und das in Funktion, also bei einer Bremsung, relativ gering belastet wird, mit einfachen Herstellungsverfahren gefertigt werden. Hierzu zählen beispielsweise das Formen des Gehäuses durch Tiefziehen eines Blechs oder durch Gießen z.B. aus einem Leichtmetall wie Aluminium, einer Aluminiumlegierung oder Gusseisen. Ebenfalls denkbar ist eine Ausführung aus Kunststoff mit entsprechenden Verstärkungen.

Das Gehäuse ist zur zugeordneten Wand des Sattelkopfes, an der sich der Bremshebel abstützt, offen, so dass die Zuspanneinrichtung einschließlich der Nachstelleinrichtung vormontiert werden kann, indem die Zuspanneinrichtung mit allen Bauteilen von der offenen Seite des Gehäuses her eingebracht wird.

Nach einer weiteren Ausführungsvariante ist vorgesehen, dass eine sattelkopfseitige Öffnung des Gehäuses nach der Vormontage der Zuspanneinrichtung sowie der Nachstelleinrichtung durch ein weiteres Bauteil oder gegebenenfalls nachträgliches Umformen des Gehäuses wieder verschlossen wird. Dabei werden wesentlich kleinere Öffnungen im Gehäuse, beispielsweise für die Abstützung des Bremshebels im Rahmen, die Zugänglichkeit zur Nachstelleinrichtung oder zum Betätigen des Bremshebels durch einen pneumatisch betriebenen Stößel, benötigt. Hierbei besteht einer der Vorteile darin, dass die kleineren Öffnungen des Gehäuses einfacher sowie kostengünstiger gegen äußere Einflüsse, wie beispielsweise Verschmutzung oder Feuchtigkeit, abgedichtet werden können.

Die Verbindung des Gehäuses mit dem Rahmen erfolgt bevorzugt durch Verschrauben oder eine andere Art von Formschluss. Denkbar ist jedoch auch eine stoffschlüssige Verbindung, insbesondere durch Schweißen.

Die Verschraubung bietet den Vorteil, dass die vormontierte Baueinheit Gehäuse/Zuspanneinrichtung zu Reparaturzwecken oder zum Austausch problemlos entnommen werden kann, was gleichfalls eine Kostenersparnis mit sich bringt. Hierzu trägt auch bei, dass die Vormontage der Baueinheit, also das Einbringen der Zuspanneinrichtung in das Gehäuse, sich wesentlich einfacher gestaltet als die Montage der Funktionsteile in die angegossene Aufnahmekammer des Bremssattels, vor allem aufgrund der beengten Platzverhältnisse.

Darüber hinaus kann auf den Einsatz eines Verschlussdeckels verzichtet werden, da dieser im übertragenen Sinn einstückiger Bestandteil des separaten Gehäuses ist. Notwendige Dichtungsmaßnahmen, wie sie bisher erforderlich waren, können somit gänzlich entfallen.

Ein weiterer, betriebswirtschaftlich bedeutsamer Vorteil liegt darin, dass der Bremssattel insgesamt, also die Einheit Rahmen/Gehäuse ein geringeres Gewicht aufweist als ein Bremssattel, der komplett aus Gusseisen besteht. Damit kommt der neue Bremssattel den Forderungen nach einer gewichtsoptimierten Bauweise, die zu einer Reduzierung des Kraftstoffverbrauchs und damit einer Senkung der Betriebskosten beiträgt, entgegen.

Im Übrigen bleibt die Belastbarkeit des Bremssattels, d.h., die Aufnahme der beim Bremsen auftretenden Kräfte, uneingeschränkt erhalten, da die insoweit belasteten Teile des Rahmens unverändert geformt und dimensioniert sind. Dabei bleibt der Kraftfluss im Sattelrahmen, während das Gehäuse in Zuspannrichtung nicht belastet wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

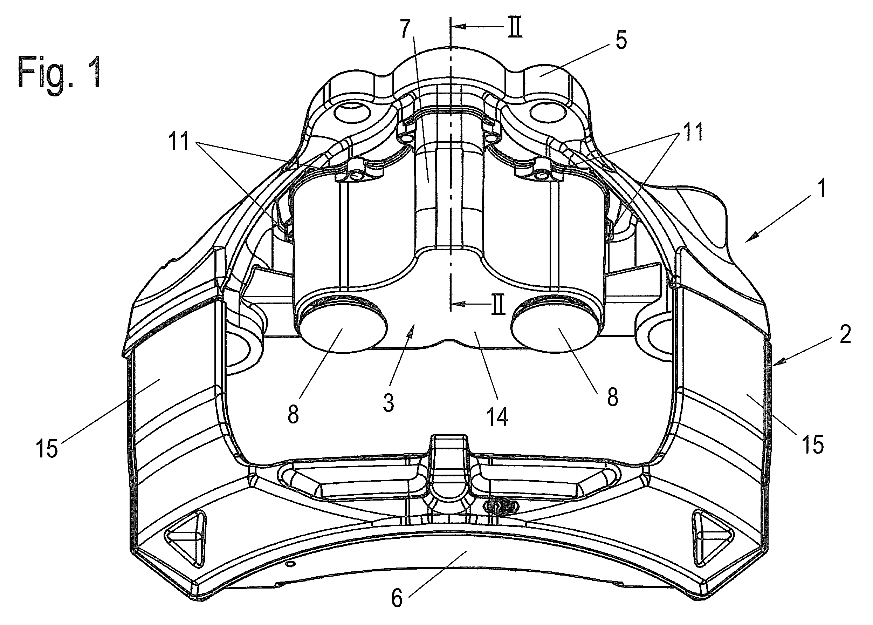

- Figur 1: einen Bremssattel einer erfindungsgemäßen Scheibenbremse in einer perspektivischen Draufsicht

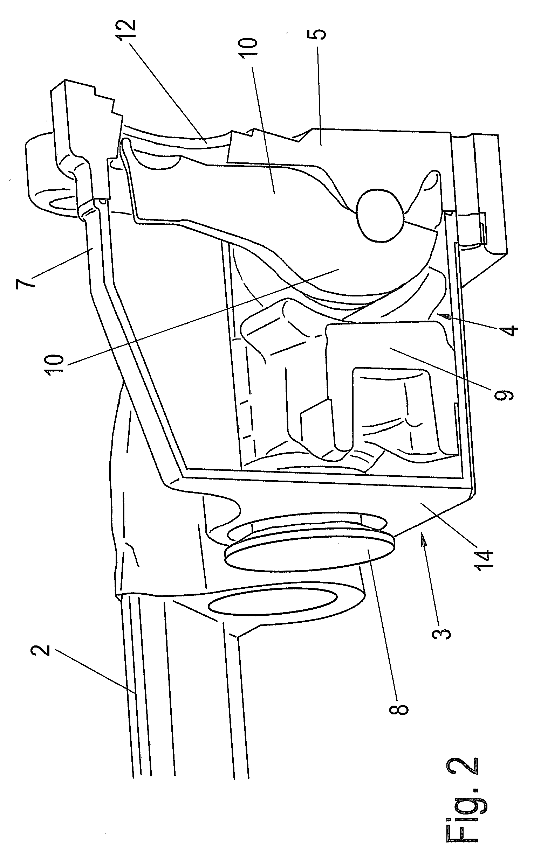

- Figur 2: einen Schnitt durch den Bremssattel gemäß der Linie II-II in Figur 1.

In den Figuren ist ein Bremssattel 1 einer Scheibenbremse für ein Nutzfahrzeug dargestellt, der in montierter Stellung eine Bremsscheibe übergreift und in dem bei einer Bremsung die Bremsscheibe kontaktierende Bremsbeläge angeordnet sind.

Erfindungsgemäß besteht der Bremssattel 1 aus einem umlaufend geschlossenen Rahmen 2 und einem separaten Gehäuse 3, in dem eine Zuspanneinrichtung 4 positioniert ist.

Das Gehäuse 3, das oberseitig einen angeformten Hebeldom 7 aufweist, der so dimensioniert ist, dass ein Bremshebel 10 als Bestandteil einer Zuspanneinrichtung 4 frei schwenkbar ist, ist mit einem einen Sattelkopf bildenden Flansch 5, der einem Sattelrücken 6 gegenüberliegt, durch Schrauben 11 verbunden, wobei der Flansch 5 eine Durchtrittsöffnung 12 aufweist, durch die ein nicht dargestellter Stößel eines Bremszylinders zum Angriff an den Bremshebel 10 ragt.

Neben dem Bremshebel 10 weist die Zuspanneinrichtung 4 eine Traverse 9 auf, an der ein Exzenter 13 des Bremshebels 10 anliegt, der sich andererseits am Flansch 5 abstützt.

Dabei sind in der Traverse 9 zwei parallel und abständig zueinander angeordnete Bremsstempel 8 verdrehbar gelagert, die mit einer nicht dargestellten Nachstelleinrichtung, die ebenfalls im Gehäuse 3 positioniert ist, in Wirkverbindung stehen.

Die Bremsstempel 8 durchtreten einen Boden 14 des Gehäuses 3, wobei die Durchtrittsbereiche durch nicht gezeigte Faltenbälge abgedichtet sind, die einerseits an der Gehäuseinnenseite am Boden 14 und andererseits am Bremsstempel 8 angeschlossen sind.

Der Rahmen 2 wird im Übrigen gebildet aus dem genannten Flansch 5, dem gegenüberliegenden Sattelrücken 6 sowie zwei seitliche, den Flansch 5 und den Sattelrücken 6 miteinander verbindende Zugstreben 15 zur Übertragung der beim Bremsen auftretenden Kräfte. Der Rahmen 2 kann aus Gusseisen bestehen. Denkbar ist jedoch auch ihn als Schmiedeteil oder Blechformteil herzustellen.

### Bezugszeichenliste

- 1: Bremssattel
- 2: Rahmen
- 3: Gehäuse
- 4: Zuspanneinrichtung
- 5: Flansch
- 6: Sattelrücken
- 7: Hebeldorn
- 8: Bremsstempel
- 9: Traverse
- 10: Bremshebel
- 11: Schraube
- 12: Durchtrittsöffnung
- 13: Exzenter
- 14: Boden
- 15: Zugstreben

## Patentansprüche

1. Scheibenbremse für ein Nutzfahrzeug, mit einem Bremssattel (1) und einer darin angeordneten Zuspanneinrichtung (4), enthaltend einen schwenkbaren Bremshebel (10), mindestens einen, bei einer Bremsung an einen Bremsbelag anpressbaren Bremsstempel (8), eine Traverse (9), in der der Bremsstempel (8) verdrehbar gelagert ist, sowie eine Nachstelleinrichtung zum Ausgleich eines sich verändernden Lüftspiels, **dadurch gekennzeichnet, dass** der Bremssattel (1) aus einem die Zuspanneinrichtung (4) aufnehmenden separaten Gehäuse (3) und einem umlaufend geschlossenen, einen als Flansch (5) ausgebildeten Sattelkopf, einen diesen gegenüberliegenden Sattelrücken (6) sowie zwei seitliche, den Flansch (5) und den Sattelrücken (6) miteinander verbindende Zugstreben (15) aufweisenden Rahmen (2) besteht, an dem das in einem durch den Flansch (5), den Sattelrücken (6) und die Zugstreben (15) begrenzten Innenraum des Rahmens (2) positionierte Gehäuse (3) befestigt ist, wobei sich der Bremshebel (10) gegenüber der Traverse (9) am Flansch (5) abstützt.

2. Scheibenbremse nach Anspruch 1, **dadurch gekennzeichnet, dass** das Gehäuse (3) form- und/oder stoffschlüssig mit dem Rahmen (2) verbunden ist.

3. Scheibenbremse nach Anspruch 1 oder 2, **dadurch gekennzeichnet, dass** das Gehäuse (3) einen Hebeldom (7) aufweist, zur freien Verschwenkung des Bremshebels (10).

4. Scheibenbremse nach einem der vorhergehenden Ansprüche, **dadurch gekennzeichnet, dass** das Gehäuse (3) auf seiner dem Flansch (5) abgewandten Seite einen Boden (14) aufweist, der von dem Bremsstempel (8) durchtreten ist.

5. Scheibenbremse nach einem der vorhergehenden Ansprüche, **dadurch gekennzeichnet, dass** das Gehäuse (3) als Blechumformteil ausgebildet ist.

6. Scheibenbremse nach einem der vorhergehenden Ansprüche, **dadurch gekennzeichnet, dass** das Gehäuse (3) als Gussteil, vorzugsweise aus Leichtmetall, ausgebildet ist.

7. Scheibenbremse nach einem der vorhergehenden Ansprüche, **dadurch gekennzeichnet, dass** das Gehäuse (3) als Kunststoffteil, vorzugsweise mit Verstärkungen, ausgebildet ist.

8. Scheibenbremse nach einem der vorhergehenden Ansprüche, **dadurch gekennzeichnet, dass** sich der Bremshebel (10) einerseits an der Traverse (9) und andererseits am Flansch (5) abstützt.

9. Scheibenbremse nach einem der vorhergehenden Ansprüche, **dadurch gekennzeichnet, dass** der Flansch (5) eine Durchtrittsöffnung (12) aufweist, zur Durchführung eines Stößels eines am Flansch (5) befestigbaren Bremszylinders, wobei der Stößel am Bremshebel (10) angreift.

10. Scheibenbremse nach einem der vorhergehenden Ansprüche, **dadurch gekennzeichnet, dass** der Rahmen (2) aus Gusseisen besteht oder als Schmiedeteil oder Blechformteil ausgebildet ist.

## Claims

1. Disc brake for a commercial vehicle, having a brake calliper (1) and a brake application device (4) arranged therein, containing a pivotable brake lever (10), at least one brake plunger (8) which can be pressed against a brake pad in a braking operation, a cross-piece (9), in which the brake plunger (8) is arranged so that it can be rotated, and an adjustment device for compensating a changing air gap, **characterised in that** the brake calliper (1) is composed of a separate housing (3) receiving the brake application device (4) and a calliper head formed as a flange (5) and circumferentially closed, a calliper back (6) lying opposite thereto as well as a frame (2) having two lateral tie rods (15) connecting the flange (5) and the calliper back (6) to each other, to which frame (2) the housing (3) positioned in an inner space of the frame (2) defined by the flange (5), the calliper back (6) and the tie rods (15) is secured, wherein the brake lever (10) bears against the flange (5) with respect to the cross-piece (9).

2. Disc brake according to claim 1, **characterised in that** the housing (3) is connected in a positively locking and / or material locking manner to the frame (2).

3. Disc brake according to claim 1 or 2, **characterised in that** the housing (3) has a lever dome (7) for free rotation of the brake lever (10).

4. Disc brake according to one of the preceding claims, **characterised in that** the housing (3) has, on its side facing away from the flange (5), a bottom (14), through which the brake plunger (8) has been passed.

5. Disc brake according to one of the preceding claims, **characterised in that** the housing (3) is formed as a sheet metal formed part.

6. Disc brake according to one of the preceding claims, **characterised in that** the housing (3) is formed as a cast component, preferably of light metal.

7. Disc brake according to one of the preceding claims, **characterised in that** the housing (3) is formed as a plastic part, preferably with reinforcements.

8. Disc brake according to one of the preceding claims, **characterised in that** the brake lever (10) bears on the one hand against the cross-piece (9) and on the other hand against the flange (5).

9. Disc brake according to one of the preceding claims, **characterised in that** the flange (5) has a passage opening (12), for passing through a plunger of a brake cylinder which can be secured to the flange (5), wherein the plunger engages against the brake lever (10).

10. Disc brake according to one of the preceding claims, **characterised in that** the frame (2) is composed of cast iron or is formed as a forged part or sheet metal formed part.

## Revendications

1. Frein à disque pour un véhicule utilitaire, comprenant un étrier (1) de frein et un dispositif (4) de serrage qui y est monté, comportant un levier (10) de frein pivotant, au moins un poinçon (8) de frein pouvant, lors d'un freinage, être pressé sur une garniture de frein, une traverse (9) dans laquelle le poinçon (8) de frein est monté avec possibilité de torsion, ainsi qu'un dispositif de rattrapage de jeu pour compenser un entrefer se modifiant, **caractérisé en ce que** l'étrier de frein est constitué d'une enveloppe (3) distincte recevant le dispositif (4) de serrage et d'un cadre (2) fermé faisant le tour, ayant une tête d'étrier constituée en bride (5), un dos (6) d'étrier opposé à celle-ci, ainsi que deux entretoises (15) latérales reliant entre eux la bride (5) et le dos (6) de l'étrier, cadre sur lequel est fixé l'enveloppe (3) placée dans un espace intérieur du cadre (2) délimité par la bride (5), par le dos (6) de l'étrier et par les entretoises (15), le levier (10) de frein s'appuyant sur la bride (5) en face de la traverse (9).

2. Frein à disque suivant la revendication 1, **caractérisé en ce que** l'enveloppe (3) est reliée au cadre (2) à complémentarité de forme et/ou à complémentarité de matière.

3. Frein à disque suivant la revendication 1 ou 2, **caractérisé en ce que** l'enveloppe (3) a un dôme (7) de levier pour que le levier (10) de frein pivote librement.

4. Frein à disque suivant l'une des revendications précédentes, **caractérisé en ce que** l'enveloppe (3) a, du côté éloigné de la bride (5), un fond (14) qui est traversé par le poinçon (8) de frein.

5. Frein à disque suivant l'une des revendications précédentes, **caractérisé en ce que** l'enveloppe (3) est constituée sous la forme d'une pièce de tôle conformée.

6. Frein à disque suivant l'une des revendications précédentes, **caractérisé en ce que** l'enveloppe (3) est constituée sous la forme d'une pièce coulée, de préférence en métal léger.

7. Frein à disque suivant l'une des revendications précédentes, **caractérisé en ce que** l'enveloppe (3) est constituée sous la forme d'une pièce en matière plastique, ayant de préférence des renforts.

8. Frein à disque suivant l'une des revendications précédentes, **caractérisé en ce que** le levier (10) de frein s'appuie, d'une part, sur la traverse (9) et, d'autre part, sur la bride (5).

9. Frein à disque suivant l'une des revendications précédentes, **caractérisé en ce que** la bride (5) a une ouverture (12) traversante pour le passage d'un poussoir d'un cylindre de frein pouvant être fixé à la bride (5), le poussoir attaquant le levier (10) de frein.

10. Frein à disque suivant l'une des revendications précédentes, **caractérisé en ce que** le cadre (2) est en fonte ou est constitué sous la forme d'une pièce forgée ou d'une pièce moulée en tôle.
